Europäisches Patentamt

European Patent Office

Office européen des brevets

(11) Publication number: **0 453 614 A1**

# EUROPEAN PATENT APPLICATION

(21) Application number: 90108125.7

(22) Date of filing: 27.04.90

(51) Int. Cl.5: **C10M 171/00**, C08F 2/08, C08F 265/04, //(C08F265/04, 220:06),C10N40:00,C10N70:00

(43) Date of publication of application:
30.10.91 Bulletin 91/44

(84) Designated Contracting States:
**DE FR GB SE**

(71) Applicant: **HERCULES INCORPORATED**
**Hercules Plaza**
**Wilmington Delaware 19894(US)**

(72) Inventor: **Ahmed, Syed M.**
**4912 S. Tupelo Turn**
**Wilmington, Delaware 19808(US)**

(74) Representative: **Lederer, Franz, Dr. et al**
**Lederer, Keller & Riederer, Patentanwälte,**
**Lucile-Grahn-Strasse 22**
**W-8000 München 80(DE)**

(54) **Electrorheological fluids.**

(57) Disclosed is a method for making electrorheological fluids in which substantially hydrophobic polymeric solid particles are dispersed in a vehicle consisting of an electrically non-conducting fluid, a surface modifying monomer that polymerizes to a polymer that has more hydrophilic reactive groups than the polymeric solid particles is added to the vehicle, the surface modifying monomer is polymerized in the vehicle on the surfaces of the solid polymer particles to form solid polymer particles that have substantially hydrophobic polymer cores and hydrophilic polymer shells around the cores, and a neutralizer that reacts with the hydrophilic reactive groups of the surface modifying monomer is added to the vehicle to increase the surface potential of the polymer shells on which the polar liquid is adsorbed.

EP 0 453 614 A1

This invention relates to a method for making electrorheological fluids in which polymeric solid particles with a polar liquid adsorbed in their surfaces arc dispersed in an electrically non-conducting fluid.

Electrorheological (ER) fluids (also known as electro-viscous fluids) are colloidal dispersions of polymeric particles in a low conductivity continuous medium that show a rapid increase in apparent viscosity of several or more orders of magnitude when exposed to an electric field, with typical response times being on the order of milliseconds. The increase is usually completely reversible, so that the compositions revert to their initial (zero-field) viscosity upon removal of the electric field.

These fluids respond to the influence of an electric potential by showing a very rapid and pronounced increase in bulk viscosity. This phenomenon can appear as an increase in apparent viscosity of several or more orders of magnitude. The phenomenon is generally completely reversible, with the compositions reverting to their initial (zero-field) viscosity upon removal of the electric field. ER fluids change their characteristics very rapidly when electric fields are applied or released with typical response times being on the order of milliseconds The ability of ER fluids to respond rapidly to electrical signals allows devices using ER fluids to replace standard electromechanical elements. This greatly expands the number of repetitions a mechanical device can perform. Therefore, ER fluids offer important advantages in a variety of mechanical systems, particularly those that require a rapid response interface between electronic controls and mechanical devices.

One commercial application of such fluids is in electromechanical clutches in which the fluid is disposed between the surfaces of two electrically conductive members, across which an electric potential can be applied. The fluid responds to the application of the electric potential by instantaneously and reversibly changing its apparent bulk viscosity and yield stress and in sufficiently strong fields, the fluid thickens to a solid or semi-solid condition that transmits torque between the surfaces of the clutch members. Other applications in which ER fluids can be used include fluid filled engine mounts, high speed valves with no moving parts and the interface between electronic and mechanical parts of a machine.

Typically, an ER fluid consists of four components: continuous phase, a particulate material, a polar liquid that is normally adsorbed in the surface of the particulate material, and a stabiliser. The particulate material and polar liquid constitute a dispersed phase. Each of the four components can be one material or a mixture.

The continuous phase or vehicle is usually a non-polar liquid with a low dielectric constant and a high breakdown strength, such as a mineral oil, a silicone oil or an aliphatic hydrocarbon. The stability, zero-field viscosity, and density of the vehicle play an important role in the performance of ER fluids.

A variety of materials including starch, silica-gel, and hydrophilic synthetic polymers are conventionally used as the particulate material. The nonpolar dielectric fluid should have a permittivity less than that of the particles to facilitate the polarization of the particles.

Conductivity, permittivity, particle size, and hydrophilicity of the particulate material are variables that may affect the performance of an ER fluid. The particle porosity and the characteristics of the adsorbed polar liquid component (often referred to as a "dopant") are also important factors.

The polar liquid component in ER fluids is usually water for hydrophilic particles, but it may be an alcohol or other polar liquid. It may facilitate polarization of the particles, to create attractive forces between the particles, and additionally make the surface of the particles wet and sticky, thus facilitating the formation of chains of particles under the applied electric potential.

Suspension stabilizers such as surface active agents are often used to prevent the particles from coagulating and settling, or to increase the electrorheological response of the fluid, or both.

It is known, for instance from U.S. patents 4,033,892 and 4,129,513 and British Patent 1,570,234, to make particulate material by first polymerizing a monomer to form a polymer (in these references, containing acid groups) recovering bulk polymer from the polymerization medium, grinding it to particles having the desired size and a density not greater than 1.8, adding the polar liquid, and finally dispersing the polymer particles in a continuous phase liquid that contains a stabilizer.

The density limitation reflects the problem of particle sedimentation encountered in known methods, which has been only partially resolved by matching the density of the particles with the density of the dispersion medium. However, the density of the medium is more sensitive to changes in temperature than is the density of the dispersed polymer, and consequently, phase separation may occur with a change in temperature.

There is also a problem in known methods in that the dispersion polymerization process, which results in a polymeric dispersion of finely divided spherical particles, has not been considered for making ER fluids mainly because monomers that produce somewhat hydrophilic polymers by in-situ polymerization are not usually soluble or dispersible in liquids with a low dielectric constant used as the vehicles for ER fluids, such as a mineral oil, and any polymers produced by such in-situ polymerization would not be sufficiently hydrophilic to be wetted by water as the polar liquid.

There is a need for a method for making rheological fluids that eliminates the grinding step, offers better control over polymer particle size and particle size distributions in a low conductivity vehicle, avoids the density-matching problem, and produces polymers that are sufficiently hydrophilic to be wetted by water. There is also a need for such a method that produces particles that require a lower amount of water than that required as a dopant for the conventional hydrophilic polymer particles of the prior art, to reduce the current densities required. (The higher the amount of water in an ER fluid, the higher the current density required).

According to the invention, a method for making electrorheological fluids in which polymeric solid particles are dispersed in a vehicle consisting of an electrically non-conducting fluid, and a polar liquid is added to the vehicle, is characterized in that the polymeric solid particles are substantially hydrophobic, and before the polar liquid is added, a surface modifying monomer that polymerizes to a polymer that has more hydrophilic reactive groups than the polymeric solid particles is added to the vehicle, the surface modifying monomer is polymerized in the vehicle on the surface of the solid polymer particles, whereby the solid polymer particles have substantially hydrophobic polymer cores and hydrophilic polymer outer coatings or shells around the cores, and a neutralizer that reacts with the hydrophilic reactive groups of the surface modifying monomer is added to the vehicle to increase the surface potential of the polymer shells on which the polar liquid is adsorbed. Preferably, the polar liquid is water.

The major part of the weight of the particles made according to the invention preferably consists of the substantially hydrophobic polymer, with a relatively minor amount of the hydrophilic surface-modifying polymer forming the shell that modifies the polarity of the particle-medium interface. More preferably, the hydrophilic shell constitutes about 15% of the particle by weight.

The electrorheological fluid prepared according to the invention produces polymers that are sufficiently hydrophilic to be wetted by water or another polar liquid independently of the degree of hydrophilicity of the polymer core, and permits some degree of control over the extent to which the water or other polar liquid dopant tends to be adsorbed into the hydrophilic shell of the particle. The quantity of water required can thereby be significantly reduced. It is to be noted that the higher the amount of water in an ER fluid, the higher are the current densities required to produce an ER response.

The precursor monomer for the substantially hydrophobic polymeric solid particles may first be dispersion-polymerized to the desired particle size, recovered from the polymerization medium, and then dispersed in the dispersion medium. Preferably, however, to produce the polymeric solid particles a precursor monomer for the substantially hydrophobic polymeric solid particles is first dissolved and polymerized in the vehicle before the surface modifying monomer is added, the precursor monomer being polymerized in the presence of a steric stabilizer that has a strong affinity for the particle surface.

By preparing an electrorheological fluid according to this preferred modification of the invention the problems associated with the recovery, drying, and subsequent grinding of the polymer in known procedures are eliminated when producing the polymer core particles. The particle size obtained by the in-situ polymerization step of the method according to the invention can be accurately controlled, and adjustment of the level of the core polymer in the vehicle is facilitated.

Preferably, the diameter of the particles is 0.1 to not more than 25 microns, more preferably not more than 10 microns, and most preferably in the range of 0.5 to 0.8 micron including the shell, and in any case most preferably less than 1 micron. The smaller sizes provide more stable dispersions, since the rate of sedimentation of the dispersed phase particles follows Stokes' law, which shows that the stability against sedimentation is directly dependent upon the square of the particle diameter and the density difference between the particles and the medium and inversely dependent upon the viscosity of the medium. The organic medium used for polymerization is usually not as dense as the dispersed phase polymer, and may have a relatively low viscosity. Therefore, the particle size is an important factor in avoiding sedimentation during storage.

Since the polymerizations of both the monomers according to the invention are dispersion polymerizations. in which the monomeric starting material is soluble in the polymerization medium (although the resulting polymers are not), the initial mixture is homogeneous.

Among the monomers that may be polymerized to form the hydrophobic core particles dispersed in the medium are acrylates such as ethyl acrylate, propyl acrylate, isopropyl acrylate, butyl acrylate, isobutyl acrylate, 2-ethylhexyl acrylate, nonyl acrylate, and hexyl acrylate; and methacrylates such as methyl methacrylate, methyl ethacrylate, ethyl methacrylate, octyl acrylate, heptyl acrylate, octyl methacrylate, isopropyl methacrylate, and n-hexyl methacrylate. Higher alkyl acrylic esters that may be polymerized to form the hydrophobic particles are decyl acrylate, isodecyl methacrylate, lauryl acrylate, stearyl acrylate, behenyl acrylate and myristyl acrylate and the corresponding methacrylates. Mixtures of two or three or more long chain acrylic esters may be copolymerized with one of the carboxylic monomers. One typical useful class of copolymers comprises the methacrylates in which the alkyl group contains 10 to 18 carbon atoms. Other monomers that can be used include styrenes (including alpha-methyl styrene), vinyl acetate, vinyl toluene, vinyl chloride, and acrylonitrile.

Preferably, a difunctional or trifunctional monomer is present during the polymerization of the precursor monomer, since a crosslinked core polymer particle requires less hydrophilic material to be added to the core. A cross-linking monomer, which may be the same or different, also preferably is present during the second polymerization, to form the hydrophilic shell polymer. The crosslinking agent is preferably a polyfunctional vinylidene monomer containing at least two terminal $CH_2$ groups, including for example, butadiene, isoprene, divinyl benzene, divinyl naphthalene, acrylates and the like. More preferred crosslinking monomers are triethylene glycol dimethacrylate (TEGDMA) or divinyl benzene (DVB). Preferably the polymerization mixtures contain up to about 5% by weight of the cross-linking monomer, based on the total monomer present, more preferably, about 0.1 to 2.0 weight percent.

Preferably, the surface-modifying monomer that is polymerized to form hydrophilic shells around the solid polymer particles is a monomer that contains a carboxyl or sulfonate group. Carboxyl-containing monomers include acrylic acid, methacrylic acid, itaconic acid, aconitic acid, fumaric acid, and maleic acid. Sulfonate-containing monomers include 2-sulfoethyl acrylate, 2-sulfoethyl methacrylate, p-vinylbenzene sulfonate, vinylbenzyl sulfonate, and vinyl sulfonate.

In the process of hydrophilic modification of the core polymer particles, consideration should be give as to whether the latter are crosslinked or non-crosslinked. In each case, well known factors, such as the compatibility of the resulting hydrophilic polymer with the core polymer, the solubility of the surface modifying monomer in the continuous phase, as well as the ability of that monomer to adhere to the surface of the hydrophobic polymer, without excessively solubilizing or diffusing into it, will determine the selection of such monomers.

It is usually desirable, when the hydrophobic particles are not cross-linked, to carry out the polymerization of the surface-modifying monomer under so-called "monomer-starved" conditions, for instance, by adding over a one hour period the amount of acrylic acid required for the desired shell weight to a PMMA dispersion maintained in an inert atmosphere at the polymerization temperature (80°C.); a conventional initiator (benzoyl peroxide) and triethylene glycol dimethacrylate (TEGDMA) as a crosslinking monomer are preferably used.

Particularly when the hydrophobic particles are cross-linked, all of the acrylic acid, initiator and crosslinking agent may be added at once at the polymerization temperature, or they may be added to the dispersion of the hydrophobic particles at room temperature and polymerization begun only after the monomer has been allowed to reach an equilibrium between that adsorbed by the particles, that built up on the surfaces of the particles, and that are still dissolved in the vehicle.

Those skilled in the art will be able to determine the appropriate hydrophylic monomer and and to choose the most desirable conditions to use on the basis of known principles. It is known, for instance from U.S. Patent 4,710,525, to polymerize a hydrophilic acrylamide or methacrylamide monomer and a cross-linking monomer, for instance, onto acrylate or methacrylate polymer particles in water or a buffer solution; in that disclosure, the particles are dried and redistributed in water for reaction with biological active substances. It is also known, from U.S. Patent 4,873,166, that a monomer that is soluble in an insulating hydrocarbon medium can be polymerized in the presence of a polymer that is insoluble in the medium and has a polar group (carboxyl, hydroxyl, or amide) to produce shell-coated particles by successively solubilizing the polymer and depositing it on newly formed particles produced from the polymerized monomer.

The addition of a neutralizing agent makes a significant improvement in the ER response. Suitable organic bases that are soluble in the vehicle and serve as neutralizing agents are metal alkyls and metal aryls of lithium, aluminum, zinc, magnesium, boron, sodium, or potassium; alkoxides such as lithium tertbutoxide, potassium tertbutoxide, sodium 2-ethyl hexoxide, and amines such as octadecyl amine, 2-ethyl hexylamine and pyridine. In general any reactant that is soluble in the vehicle and that reacts with the hydrophilic reactive groups of the surface modifying monomer to increase its surface potential can be used; such reactants can be easily identified by those skilled in the art.

For instance, if the surface-modifying monomer contains a carboxyl group, such as acrylic acid, a stoichiometric amount of a basic neutralizing agent, such as butyl lithium, can be added to change the surface acid group into a salt. Since this type of neutralization reaction is exothermic, care must be taken, both in carrying out the reaction, and in handling the butyl lithium, which is a pyrophoric material. All the transfers of the material should be carried out in an argon atmosphere. Use of butyl lithium should also be restricted to non-halogenated polymers and a non-halogenated vehicle. However, the resulting product, after the reaction with butyl lithium or the like, can be diluted with halogenated hydrocarbons. The combination of acrylic acid as the surface modifying monomer with PMMA hydrophobic particles and butyl lithium as the neutralizer is preferred.

An ER fluid containing PMMA-LiPAA (poly(methyl methacrylate)-lithiated poly(acrylic acid)) particles as described above has a zero field viscosity that is at the higher end of the desired range. One way to lower the zero-field viscosity is to dilute such an ER fluid, containing about 22% dispersed phase polymeric particles, with a suitable low viscosity liquid having electrical properties similar to those of a mineral oil and having complete miscibility with mineral oil. A second approach is to carry out the polymerization steps in a lower viscosity continuous medium such as Isopar M; a 1:1 mixture of mineral oil and Isopar M; or a mixture of mineral oil and silicone oil. (Isopar M is a an aliphatic hydrocarbon fraction with a higher boiling range than kerosene.)

The electrically non-conducting fluid vehicle may be selected from any one of a large number of well known electrically insulating hydrophobic liquids in which the monomer selected dissolves. These include transformer oils, transformer insulating fluids, silicone oils, mineral oil, aliphatic hydrocarbons such as paraffin oils, halogenated aromatic liquids and halogenated paraffins. Known transformer oils are liquids having characteristic properties of both electrical and thermal insulation. The preferred electrically non-conducting fluid vehicle is mineral oil, a colorless, petroleum liquid product normally containing a major proportion of liquid aliphatic hydrocarbon materials, and known as a naturally occurring transformer oil include refined mineral oils that has a relatively low viscosity and high chemical stability. The specific gravity of mineral oil preferably ranges from about 0.76 to about 0.79, with a boiling range from about 150°C, to about 200°C. While the flash point is normally above about 40°C., for safety reasons the flash point should preferably be above about 60°C. A mineral oil having a composition of 0 to less thin 5 percent aromatics, about 40 to about 80 percent paraffins and about 15 to about 60 percent naphtha, having a flash point above 60°C. is a more preferred vehicle.

While the proportion of mineral oil used may vary from 99 weight percent of mineral oil and 1 weight percent of monomer up to about 50 weight percent of mineral oil and 50 weight percent of monomer, the proportion of mineral oil preferably exceeds the amount of the monomers to be polymerised, and more preferably a concentration of about 15 to 40 weight percent of monomer is employed, most preferably, 15 to 25 weight percent of monomer.

Dispersions in organic media are inherently less stable than those in aqueous systems, and thus require a steric stabilizer to overcome the attractive interaction between these particles and prevent rapid coagulation. In preferred embodiments of the invention, a polymeric stabilizer is used for this to provide a repulsive steric barrier at the interface. Suitable polymeric stabilizers include homopolymers and copolymers that have a strong affinity for the particle surface, including random copolymers and block and graft copolymers having one segment that is soluble in the polymerization medium and the another that has an affinity towards the dispersed phase polymer. The comonomeric surfactants may be soluble in the continuous phase.

In the cage of a block copolymer stabilizer, one block forms an anchor group that is nominally insoluble in the fluid media and attaches to the particle surface. The other block is soluble in the fluid, will generally be very long and provides the steric stabilization barrier. In the case of graft copolymers, a long polymeric backbone is formed by one of the copolymers and forms the anchor for attaching the molecule to the particle, while side chains of the other copolymer, attached at intervals along its length, are solvated by the fluid media.

A homopolymer can serve as a steric stabilizer if it is essentially soluble in the fluid but has some functionality with strong affinity for the particle surface. Similarly, a random copolymer can also be used as a steric stabilizer.

Typical polymers that can be used as preferred stabilizers include homopolymers such as poly(methyl methacrylate) (PMMA), poly(vinyl acetate) (PVA), poly(12 hydroxystearic acid) (PSA) or poly(lauryl methacrylate) (PLM). The following graft or block copolymers are preferably used when the dispersion polymer is poly(methyl methacrylate) or poly-styrene: PMMA/PSA, PVA/PSA, PMMA/PLM or styrene-butadiene copolymer. When the dispersion polymer is poly(vinyl acetate), the stabilizing block or graft copolymer is preferably PVA/PSA or PMMA/PSA.

It is well known that the particle size and particle size distribution of the polymeric particles produced by dispersion polymerization can be controlled by varying the concentration of the monomer as well as the concentrations of the initiator and stabilizer. The degree of solvency of the polymerization medium and the polymerization temperature also have a strong effect on the particle size and the particle size distribution of the resulting polymeric dispersions. It is also known that, for the polymers that are soluble in their own monomers, the unreacted monomer keeps the growing radicals in the solution form for a much longer period compared to those monomers that do not act as a solvent for the resulting polymers. In such systems, the concentration of the monomer is very important, as a determinant not only of the particle size, but also of the stability of the dispersions.

The polar liquid may be any liquid that is capable of wetting the hydrophylic shell polymer. Water is of course the most economical, and since it also works well it is therefore the most desirable. The skilled man can easily determine, with a minimum of experimentation, what other polar liquids give a good ER response with the particular shell monomer that is used.

In the examples that follow, the following procedure was followed (except when otherwise indicated) in measuring the response of ER fluids produced according to this invention. A Rheometrics System 4 Rheometer (Rheometrics, Inc., Princeton, N.J.) was modified to facilitate the application of an applied electric field and was found to be a quick and reliable way of measuring the response of ER fluids.

Accordingly, the fluid option assembly (cup and bob) of the Rheometer was modified to facilitate the application of a DC potential across a 2 mm gap between the cup and bob. The test sample was held between two coaxial cylinders (the cup and bob) having a total surface area of 82.9 cm$^2$. The bob has a radius of 24 mm and is 55 mm in length and is attached to the sensitive transducer which can measure a maximum torque of 100 gm-cm. The cup has an inner radius of 26 mm allowing the 2 mm gap. It is held by a motor that can perform both rotational and oscillatary motions. The electric potential is introduced into the bob by way of a brush device. The torque measurement is not attenuated by the incorporation of the voltage device. An insulator is placed between the transducer shaft and the electrified bob to shield the transducer electronics from the high voltage. The motor shaft and the cup are grounded. A Fluke voltage generator is used as the high voltage source capable of generating a voltage generator is used as the high voltage source capable of generating a maximum voltage of 10,000V, DC. Ampmeters are used to detect the current.

A shield is placed in front of the rheometer to screen high voltage from the operator during a normal run. A standard ER test is the voltage screen experiment. The ER fluid is subjected to oscillatory shear flow at 5 rad/sec and 15% strain initially for 5 minutes. Then a voltage is turned on while the fluid is being sheared. After 15 minutes (or a shorter time, e.g. 2-5 minutes), the voltage is turned off for a several minutes. This process is repeated up to a limit of 2000V with the voltage increased in each repetition. Also it is specified that experiments be discontinued if a maximum of 2500 micro Amps is drawn by the fluid. In the Tables, included herein, Electric Field is expressed in units of kilovolts per millimeter (KV/mm). The changes in the complex viscosity, storage modulus G' and the loss modulus G'' were recorded for the electric fields of varying strength. In the tables, the viscosity is expressed in units of poise.

The ER experiments can be done at different temperatures. Below room temperature, the temperature control bath is used with the coolant being isopropyl alcohol, IPA. An external thermocouple probe immersed as close to the cup as possible is used to monitor the ER fluid temperature. For high temperatures, a Haake bath with silicone oil is used.

Changes in complex viscosity were studied as a function of applied field strength. As expected, the magnitude of the ER effect (change in the complex viscosity) increases with increasing field strength. The fluid behaves like a liquid in the unenergized state. With increased electric field strength the ER fluid goes through a viscoelastic to an elastic solid-like material. Upon termination of the applied potential, the fluid resumed its original liquid behavior.

The first step in preparing the ER fluid is to synthesize the hydrophobic polymer particles e.g. polymethylmethacrylate (PMMA), or polystyrene (PS) in mineral oil by the dispersion polymerization method according to the procedure in Example 1. The mineral oil had a room temperature viscosity of 90 cp, a density of 0.87 gm/cc and a dielectric constant at 1 KHz of 1.8.

EXAMPLE 1

DISPERSION POLYMERIZATION OF METHYLMETHACRYLATE

Dispersion polymerization of methylmethacrylate (MMA) in mineral oil was carried out using the ingredients shown in Table 1. This monomer is completely soluble in mineral oil and the resulting polymer is insoluble in this medium. In a typical experiment the stabiliser is first dissolved in mineral oil and charged to a jacketed glass reactor equipped with a stirrer, thermometer, condenser, and nitrogen sparging tube and heated to the polymerization temperature (80°C.) while sparging with nitrogen. In a separate beaker, a conventional initiator and triethylene glycol dimethacrylate (TEGDMA) as the crosslinking agent are added, dissolved in the monomer and then charged to the reactor held at the polymerization temperature. The monomer is then allowed to polymerize for about 16 hours. Addition of cold monomer to the mineral oil mixture brings the temperature down to about 65°C. Once the temperature of the reaction mixture returns to 80°C. in about 5 minutes after addition of monomer, a strong exotherm occurs and the monomer polymerizes adiabatically for a short time with temperatures reaching as high as 140°C. for several minutes. The polymerization reaction is then continued for several hours at 80°C. (The exothermic rise in temperature could have been controlled by a cooling liquid). The conversion to polymer at the end of the exotherm is more than 95% and at the end of the run is greater than 99.5% The time for reaching the end product can be shortened by adding additional initiator at the end of the exotherm. The whole process can be completed within two hours.

The particle size of the dispersions prepared using the ingredients shown in Table 1 is in the range of about 0.5-0.8 micron, with a relatively narrow distribution of particle size.

## TABLE 1
### Polymerization Recipe

|  |  |  | Parts/100 |
|---|---|---|---|
| Mineral Oil | = | 261 gms (300 ml) | 55.3 |
| Stabilizer Acryloid 956 * | = | 20 gms | 4.3 |
| Methylmethacrylate Monomer | = | 187 gms (200 ml) | 39.7 |
| Benzoyl Peroxide | = | 2.5 gms | 0.5 |
| TEGDMA ** | = | 1.1 gms | 0.2 |
| Total |  | 471.6 | 100.0 |

*Produced by Rohm and Haas (block copolymer)
**Triethylene glycol dimethacrylate (crosslinking agent)

EXAMPLE 1A

The polymethyl methacrylate dispersions described in Example 1 were used as starting hydrophobic seed particles. Those polymers were crosslinked using triethylene glycol dimethacrylate (TEGDMA) crosslinking agent. Acrylic acid (AA) was polymerized onto the hydrophobic polymer particles to form a hydrophilic shell or globule around said particles. The desired amount of acrylic acid containing dissolved benzoyl peroxide initiator and crosslinking agent was fed to the PMMA dispersion maintained in an inert atmosphere at the polymerization temperature of 80°C., over a one hour period. This process produced polymer particles having a PMMA core which was hydrophobic and a polyacrylic acid (PAA) shell or globule which was hydrophilic. A typical recipe is given in Table 1A.

## TABLE 1A

| | |
|---|---|
| PMMA dispersion of Example 1 | 250 grams |
| Mineral oil | 250 grams |
| Acrylic acid | 15.75 grams (15 ml) |
| Benzoyl peroxide | 0.30 grams |
| TEGDMA | 0.10 grams |
| | |
| Total | 516.15 grams |

### EXAMPLE 1B

The surface acid groups of PMMA-PAA particles prepared in Example 1A are neutralized using stoichiometric amounts of butyl lithium. In a typical laboratory run. 300 grams of PMMA-PAA dispersion of Example 1A is reacted with 12.75 ml of 10 Molar butyl lithium. This reaction is carried out under an argon atmosphere. The reaction changes the COOH groups to $COO^- Li^+$ groups and produces butane as the byproduct. The ER fluids are doped through addition of water while stirring. Unless otherwise stated the ER fluids in the following examples contain 1% water.

The neutralized PMMA-PAA fluids of this invention provide complete reversibility of the ER response. Unneutralized PMMA-PAA fluids which had been exposed to an applied field did not return to the same zerofield viscosity on termination of the field. However, higher shear rates or longer waiting periods did help in bringing the viscosities of unneutralized fluids back to the original zero field viscosity.

### EXAMPLES 2 TO 9

Table 2 shows the performance of the neutralized PMMA-LiPAA based ER fluids doped with water at field strengths from 0.0 to 1.0 KV/mm. Table 3 shows the effect of temperature on the performance of PMMA-LiPAA based ER fluids. In Table 4 the current density versus the temperature is shown. Table 5 shows the effect of heat treatment of the ER fluids on the performance of these fluids. Table 6 shows the effect of varying the method of addition of acrylic acid on the performance of the ER fluids. In Table 7 the performance of the ER fluids with various dopants is shown and in Table 8 the effect of changing the concentration of the water dopant at higher field strengths is shown. These data are obtained on the Rheometrics Mechanical Spectrometer (RMS) which is equipped with a transducer which can measure a maximum torque of 2000 gm-cm.

EP 0 453 614 A1

## TABLE 2

## Performance of PMMA-LiPAA Based ER Fluids

| Example No. | Field Strength KV/mm | Viscosity (Poise) | | | | |
|---|---|---|---|---|---|---|
| | | 0.0 | 0.25 | 0.5 | 0.75 | 1.0 |
| 2A | | 8.3 | 60 | 235 | 480 | 630 |
| 2B | | 8.9 | 78 | 274 | 511 | --- |
| 2C | | 7.8 | 80 | 256 | 430 | overload |
| 2D | | 8.1 | 53 | 172 | 352 | 515 |
| 2E | | 8.4 | 51 | 177 | 370 | 558 |
| 2F | | 9.3 | 80 | 280 | 580 | overload |
| 2G | | 4.3 | 45 | 148 | 285 | 420 |
| 2H | | 5.5 | 37 | 135 | 250 | 360 |
| 2I | | 8.2 | 34 | 126 | 257 | 380 |
| 2J | | 4.1 | | 130 | | 430 |

Fluid Composition    PMMA  = 19.2
                          LiPAA = 3.3
                          $H_2O$   = 1.0
                          Rest  = 76.5

## TABLE 3

### Effect of Temperature on
### Performance of PMMA-LiPAA Based ER Fluids

| Example No. | Temperature | Field Strength KV/mm | Viscosity (Poise) | | | | |
|---|---|---|---|---|---|---|---|
| | | | 0.0 | 0.25 | 0.5 | 0.75 | 1.0 |
| 3A | -25°C | | 328 | 731 | 1067 | -- | -- |
| 3B | 0°C | | 45 | 190 | 554 | 1212 | 1198 |
| 3C | 15°C | | 25 | 120 | 610 | 1200 | 1230 |
| 3D | 25°C | | 7.8 | 54 | 265 | 525 | --- |
| 3E | 40°C | | 6.8 | 58 | 304 | 534 | --- |
| 3F | 60°C | | 5.2 | 78 | 298 | 318 | --- |
| 3G | 80°C | | 4.5 | 97 | 221 | 256 | 275 |
| 3H | 100°C | | 3.1 | 79 | 128 | 139 | 154 |

Fluid Composition

PMMA = 19.2
LiPAA = 3.3
$H_2O$ = 1.0
Rest = 76.5

## TABLE 4

### Performance of PMMA-LiPAA Based ER Fluids
#### Current Density vs Temp.

| Example No. | Temperature °C | Field Strength KV/mm | Current Density (uA/sq. cm.) | | | |
|---|---|---|---|---|---|---|
| | | | 0.25 | 0.5 | 0.75 | 1.0 |
| 4A | 15°C | | 0.00025 | 0.006 | 0.042 | 0.1 |
| 4B | 25°C | | 0.0006 | 0.04 | 0.25 | -- |
| 4C | 40°C | | 0.0024 | 0.29 | 2.2 | -- |
| 4D | 60°C | | 0.13 | 7.16 | 28.25 | -- |
| 4E | 80°C | | 6.2 | 36.75 | 90.0 | 150 |
| 4F | 100°C | | 18.6 | 56.25 | 91.2 | 114 |

Fluid Composition

PMMA = 19.2  
LiPAA = 3.3  
$H_2O$ = 1.0  
Rest = 76.5

EP 0 453 614 A1

EP 0 453 614 A1

## TABLE 5

### Effect of Heat Treatment on the Performance
### of PMMA-LiPAA Fluid

| | | | Viscosity (Poise) at room temperature | | | | | |
|---|---|---|---|---|---|---|---|---|
| Example No. | Heat Treatment | Field Strength KV/mm | 0.0 | 0.125 | 0.25 | 0.50 | 0.75 | 1.0 |
| 5A | None | | 4.7 | 16 | 45 | 148 | 285 | 420 |
| 5B | 2 hrs. at 120°C | | 5.3 | 27 | | 230 | 380 | 520 |
| 5C | 8 hrs. at 120°C | | 5.4 | 23 | 64 | 178 | 292 | 400 |
| 5D | 16 hrs. at 120°C | | 5.1 | 18 | 50 | 155 | 273 | 380 |

Fluid Composition    PMMA = 19.2
LiPAA = 3.3
$H_2O$ = 1.0
Rest = 76.5

## TABLE 6

### Performance of PMMA-LiPAA Based ER Fluids
### Effect of Method of Acrylic Acid Polymerization

| Example No | Method of Addition | Field Strength KV/mm | Viscosity (Poise) 0 | 0.25 | 0.50 | 0.75 | 1.0 |
|---|---|---|---|---|---|---|---|
| 6A | Addition over one hour | 8.4 | 51 | 177 | 370 | 558 | |
| 6B | Addition over two hours | 8.5 | 42 | 142 | 301 | 499 | |
| 6C | Addition at 80°C in one short | 9.8 | 40 | 131 | 254 | 411 | |
| 6D | AA added several hours before polymerization at RT | 9.5 | 46 | 167 | 350 | 526 | |
| 6E | "        " | 8.1 | 53 | 172 | 353 | 516 | |

Fluid Composition    PMMA  = 19.2
LiPAA = 3.3
H$_2$O  = 1.0
Rest  = 76.5

EP 0 453 614 A1

EP 0 453 614 A1

## TABLE 7

### Performance of PMMA-LiPAA Based ER Fluids
#### With Various Dopants

| Example No. | Fluid Composition % | | | | | Viscosity (Poise) | | | | | |
|---|---|---|---|---|---|---|---|---|---|---|---|
| | PMMA | Li PAA | Dopant | Rest | Dopant | KV/mm | 0 | 0.25 | 0.5 | 0.75 | 1.0 |
| 7A | 19.2 | 3.3 | 1 | 76.5 | $H_2O$ | | 7.2 | 68 | 297 | 910 | |
| 7B | 19.2 | 3.3 | 1 | 76.5 | DMSO | | 4.6 | 6.5 | 6.5 | 6.5 | 6.2 |
| 7C | 19.2 | 3.3 | 1 | 76.5 | MFA | | 21.2 | 25 | 23 | 33 | 22 |
| 7D | 19.2 | 3.3 | 1 | 76.5 | EG | | 63 | 52 | 37 | 37 | 42 |
| 7E | 19.2 | 3.3 | 1 | 76.5 | ETOH | | 5.4 | 8.3 | 7.9 | 7.9 | 7.3 |

DMSO is dimethyl sulfoxide
MFA is Methyl formamide
EG is ethylene glycol
ETOH is ethyl alcohol

**TABLE 8**

**Performance of PMMA-LiPAA Based ER Fluids**
**Effects of Dopant (water) on ER Effect**

| Example No. | Fluid Composition % | | | | Field Strength KV/mm | Viscosity (Poise) | | | | | | |
|---|---|---|---|---|---|---|---|---|---|---|---|---|
| | PMMA | Li PAA | $H_2O$ | Rest | .0 | 0.5 | 1.0 | 1.5 | 2.0 | 2.5 | 3.0 | |
| 8A | 19.2 | 3.3 | 0.5 | 77 | 5.5 | 60-10 | 178 13 | 160 14 | 237-20 | 253-350 | -- | |
| 8B | 19.2 | 3.3 | 0.75 | 76.75 | 5.0 | 82 | 265 | 485 | 740 | 960 (300) | -- | |
| 8C | 19.2 | 3.3 | 1.0 | 76.5 | 4.1 | 130 | 437 | 836 | 1290 | 1810 | 2320 | |
| 8D | 19.0 | 3.3 | 1.5 | 76.2 | 5.6 | 197 | 670 | -- | -- | -- | -- | |

Table 2 shows the consistency of performance of PMMA-LiPAA fluids prepared according to the same formulation over a period of more than a year. There is a reasonably good correlation between the different runs. On average a typical fluid with about 22% solids shows a 70 to 100 fold increase in viscosity at an applied DC field strength of 1 KV/mm, a 300 fold increase at 2 KV/mm and 600 fold at 3 KV/mm as shown in Table 8. In all of these examples the weight percent of the polymer particles is only about 22% of the total fluid. Higher viscosity changes can be obtained by increasing the concentration of the particles in the system. The results shown in Table 6 indicate that with crosslinked PMMA particles, the method of addition of acrylic acid does not have much effect on the performance behavior of the ER fluid. The general performance trends of the fluids neutralized with butyl lithium are similar to those of unneutralized PMMA-PAA fluids in that increases in the amount of PAA enhance the ER performance and at any given PAA level there is an optimum in performance with increasing dopant level.

Tables 3 and 4 show the sensitivity of the viscosity of the ER fluids to changes in temperatures. A change in the temperature from -25° C. to 100° C. causes a more than 1000-fold change in the viscosity of mineral oil. A typical PMMA-LiPAA fluid made in the same mineral oil continuous phase liquid showed a 100-fold change in the viscosity over the same temperature range. The viscosity profiles of the energized fluid are still flatter compared with that of the fluid at zero-field. The ratio of the energized viscosity to the zero-field viscosity, however, goes through an optimum over this temperature range and this optimum seems to be dependent upon the applied field. The diminishing response at both ends of the temperature range is due to very high and very low viscosity of the fluid at zero-field. With the PMMA-LiPAA/water doped ER fluid it has been determined that response is reversible upon returning the fluid to room temperature, indicating no permanent loss of water. The data shown in Table 5 indicate very little change in the response with increasing heat treatment for up to 16 hours In this case the water present in the system is not free water which can be frozen and evaporated out of the system by cooling and heating. The lower performance at low temperature is mainly due to increased zero-field viscosity. The reason for lower response at high temperature is not clear but it may be related to increases in conductivity of the system with increasing temperature.

The data for current density for the above fluid as a function of applied field strength are given in Table 4. The current densities of this fluid are extremely low at room temperature. As the temperature increases, current densities increase. For example, the current density at 80° C. is about 1500 times the current density at room temperature for a 1 KV/mm applied field. Even though the current densities at high temperatures are several orders of magnitude higher than those at room temperature, they are still well within the acceptable range for many of the intended applications.

The stability of the ER fluids neutralized with butyl lithium was found to be excellent with no phase separation seen upon standing for several months. However, the stability was slightly less than on ethanol doped PMMA dispersion prepared according to Example 1 which has not been hydrophilically modified.

Table 7 provides the results for various dopants which were tested in addition to water. Dimethyl sulfoxide, N-methyl formamide, ethylene glycol, and ethanol were tested. None of these were effective dopants. Insignificant ER responses were produced in each case. N-methyl formamide and ethylene glycol seemed to swell the particles and facilitate interparticle bridging, thereby increasing the zero-field viscosity by several factors. Dimethyl sulfoxide and ethanol, which are not solvents for PAA, did not have any effect on the zerofield viscosity of the fluids.

In Table 8 the ER performance of fluids at various levels of water can be seen. At a level of about 2% water, the fluid became very thick. In measuring the response of the fluid with 1.5 and 2.0% water a problem with current overload was encountered.

The ER response of these fluids is comparable to state of the art fluids made from silica gel in silicone oil with about 50% higher solids than fluids of this invention. In addition, the fluids prepared in accordance with this invention are much superior in their current densities and stability than the prior art fluids.


EXAMPLES 9 TO 13

Examples 9 and 10 describe fluids made by dilution of the ER fluids of Example 1B to reduce the zero-field viscosity. Examples 11 to 13 show the manufacture of the polymer particles in various media followed by dilution. The various diluents used and their physical properties are given in Table 9. The diluted fluids are made through mixture of the fluids of Example 1B with the appropriate diluent in the ratio shown in Tables 9A and Table 10. The diluted ER fluids showed an irreproducible performance at field strengths lower than 1 KV/mm, but at higher field strengths, the performance was quite stable and reproducible. The performance of these electrorheological fluids is shown in Table 9A. The lowest viscosity fluid was a halocarbon oil (a low molecular weight polymer of chlorotrifluoroethylene obtained from Halocarbon Products Corp., Hackensack, N.J.) diluted fluid at 1:2 volume ratio of dispersion to diluent. The initial zero-field viscosity of this fluid was about 5 centipoise which at 3 KV/mm showed an 800 fold increase in viscosity to 40 poise. On the other hand, a sample made by 1:1 volume ratio of dispersion to diluent had an initial zero-field viscosity of 16 centipoise with a 375 fold increase in viscosity at 3 KV/mm applied field. Fluids made with Isopar M, 1 cSt silicone oil and 3 cSt silicone oil as diluents, at 1:1 volume ratio of dispersion to diluent, ranged in the initial zero-field viscosities of 30 to 60 centipoise. The changes in the viscosities upon application of the electrical field were 300-fold at 2.5 KV/mm for Isopar M diluted fluid and about 50 to 60-fold for silicone oil diluted fluids at 1 KV/mm field strength. The composition of these fluids on a weight basis is given in Table 9. All of the dilutions were made based on volume, and therefore each fluid should have the same composition based on volume. However, the density of these diluents is not the same and therefore the compositions based on weight are not identical.

## TABLE 9

### Properties of the Diluents used For Making Low Viscosity ER Fluids

| Diluents | Properties | |
|---|---|---|
| | Viscosity @ RT | Density gm/cc |
| (1) Halocarbon 1 8* | 1.8 cSt ** | 1.85 |
| (2) Isopar M | 3.46 cST | 0.78 |
| (3) Silicone Oil | 1.00 cSt | 0.82 |
| | 3.0 cSt | 0.90 |
| | 10.0 cST | 0.94 |
| Mineral Oil | 90 cp | 0.87 |

\* Low molecular weight polymers of chlorotrifluoroethylene obtained from Halocarbon Products Corp., Hackensack, New Jersey.

\*\* @ 37.8°C

These examples demonstrate that it is possible to make very low viscosity zero-field ER fluids by using low viscosity continuous phase medium and low levels of dispersed phase particles. At higher field strengths these fluids do form a stable structure and thus give reproductive and stable ER response. ER fluids with higher solids content but lower zero-field viscosities are more desirable than those with lower solids, as the maximum strength of the fluid will be much higher than for fluids containing lower levels of solids. However, the higher solids fluids with lower zero-field viscosity can only be made by increasing the particle size which in turn will have poor stability. These low viscosity and low solids fluids may be used in only very specialized applications requiring very low zero-field viscosity and relatively low ER response.

In preparing ER fluids by polymerisation in lower viscosity medium, three different types of continuous phase liquids were used for dispersion polymerization including Isopar M, 1:1 mineral oil: Isopar M and 1:1 silicone oil: mineral oil. The polymerization procedure was essentially the same as that described in Examples 1-1B. The methyl methacrylate polymerization in some examples was carried out at the 40% level followed by dilution to 20% for acrylic acid polymerization. In other cases, MMA polymerization was itself carried out at a 20% solids level followed by AA polymerization without further dilution. In the polymerization runs made with 20% MMA, acrylic acid polymerization was carried out by feeding in the monomer containing the initiator and the crosslinking agent after allowing a two hour period for MMA to polymerize.

## TABLE 9A

## ER Performance of Lower Viscosity Fluids Made by Dilution

| Example No. | Diluent | Ratio of Dispersion to Diluent | Initial (Poise) Zerofield Viscosity | Field Strength KV/mm | Viscosity (Poise) | | |
|---|---|---|---|---|---|---|---|
| | | | | | 1 | 2 | 3 |
| 9A | Halocarbon 1.8 | 1:2 | 0.05 | | 10 | 23 | 40 |
| 9B | Halocarbon 1.8 | 1:1 | 0.16 | | | | 60 |
| 9C | Isopar M | 1:1 | 0.30 | | 2.5 | 47 | 90[a] |
| 9D | 1 cSt Silicone oil | 1:1 | 0.28 | | 17 | | |
| 9E | 3 cST Silicone oil | 1:1 | 0.62 | | 30 | | |

(a) @ 2.5 KV/mm

**TABLE 10**

**Composition of the Diluted Fluids of Table 2A**

| Example No. | Diluent | Dispersion/Diluent (v/v) | Composition (wt%) | | | |
|---|---|---|---|---|---|---|
| | | | PMMA | LiPAA | H2O | Rest. |
| 10A | Halocarbon 1.8 | 1:2 (v/v) | 3.84 | 0.66 | 0.2 | 95.3 |
| 10B | Halocarbon 1.8 | 1:1 (v/v) | 6.4 | 1.1 | 0.33 | 92.17 |
| 10C | Isopar M | 1:1 (v/v) | 10.3 | 1.76 | 0.54 | 87.44 |
| 10D | 1 cSt Silicone oil | 1:1 (v/v) | 10.1 | 1.7 | 0.5 | 87.7 |
| 10E | 3 cSt Silicone oil | 1:1 (v/v) | 9.6 | 1.65 | 0.5 | 88.25 |

The performance behavior and the composition of the fluids made in Isopar M as the continuous phase is shown in Table 11. Both crosslinked and non-crosslinked poly(methyl-methacrylate) particles were used as base hydrophobic particles. Methyl methacrylate polymerization, using a procedure similar to Example 1, in each one of these fluids was carried out at the 40% level. The resulting dispersion was diluted with fresh continuous medium at a 1:1 ratio of dispersion : diluent. This diluted dispersion was used for hydrophilic modification with acrylic acid polymer. Acrylic acid polymerization to form the hydrophilic shell or globule around the polymer particles was also carried out both with and without crosslinking agent in it. Some samples, as shown in Tables 11 through 13 were neutralized with butyl lithium according to the procedure of Example 1B. The performance behavior of these fluids at low field strengths showed a somewhat unstable and irreproducible response. However, performance is more consistent at higher field strengths.

## TABLE 11

### Performance of ER Fluids Made in Isopar M

| Sample No. | Composition (%) PMMA | PAA/LIPAA | H₂O | Ront | Field Strength KV/mm 0.0 | Viscosity (Poise) 0.125 | 0.25 | 0.5 | 0.75 | 1.0 |
|---|---|---|---|---|---|---|---|---|---|---|
| 11A | 19.0[a] | 3.0[a] | 1.0 | 77.0 | 0.09 | 21.6 | 88 | 180 | — | 1.0 |
| 11B | 18.8[a] | 3.9[d] | 1.0 | 76.3 | 0.7 | 2 | | | — | — |
| 11C | 19.0[b] | 3.1[e] | 1.0 | 76.9 | 0.1 | | | 1.4 | 9 | 18 |
| 11D | 19.0[b] | 3.1[c] | 1.0 | 76.9 | 0.1 | | | 24 | 80 | 100 |
| 11E | 18.8[b] | 4.0[f] | 1.0 | 76.2 | 0.4 | 0.4 | | 1.2 | 1.5 | — |
| 11F | 18.8[b] | 4.0[d] | 1.0 | 76.2 | 0.5 | — | | 7 | 10 | — |

(a) crosslinked PMMA.  (b) non-crosslinked PMMA.  (c) crosslinked PAA.

(d) crosslinked LiPAA.  (e) non-crosslinked PAA.  (f) non-crosslinked LiPAA.

(d) polymerization @ about 40% solids.
(e) polymerization @ about 20% solids.

Table 12 gives the summary of the performance behavior of the fluids made with equal parts mineral oil and Isopar M as the continuous phase for polymerization. The first four samples in this table were made by polymerizing methyl methacrylate at the 40% level in mineral oil: Isopar M mixture, then diluting to 20% polymer with the same continuous phase before acrylic acid polymerization of the hydrophilic shell or globule followed by neutralization with butyl lithium. The fluid made with this dispersion at 1% dopant (water) showed very good performance. However, the zero-field viscosity was not as low as desired. The higher zero-field viscosity was the result of the use of higher viscosity mineral oil. Although a higher viscosity mineral oil contributes its higher viscosity, this mineral oil is useful in improving the stability of the dispersion. However, the stability of the mixed continuous phase dispersion was inferior to those of Example 1B in which mineral oil was the only component in the continuous phase. However, through selection of the appropriate stabilizer, a stable fluid can be made with the continuous phase of Example 12. Examples 1-13 herein are made only with Acryloid 956 as the stabilizer. The data in Table 13 shows the performance behavior of the fluids made in a 1:1 mixture of mineral oil and silicone oil. The performance of these fluids is similar to those made in the mineral oil-Isopar M continuous phase.

## TABLE 12

### Performance of ER Fluid Made in 50:50 Mineral Oil:Isopar M

| Example No. | Fluid Composition % | | | | Field Strength KV/mm | Viscosity (Poise) | | | | |
|---|---|---|---|---|---|---|---|---|---|---|
| | PMMA | Li PAA | $H_2O$ | Rest | | 0.0 | 0.25 | 0.5 | 0.75 | 1.0 |
| 12A | 19.4 | 3.2 | 0 | 77.4 | | 1.7 | -- | -- | -- | 1.7 |
| 12B | 19.4 | 3.2 | 0.25 | 77.15 | | 1.2 | 2.1 | 3.0 | 4.0 | 5.0 |
| 12C | 19.4 | 3.2 | 1.00 | 76.4 | | 3.9 | 5.5 | 175 | 300 | 420 |
| 12D | 20.6 | 4.0[a] | 1.00 | 74.6 | | 10.0 | 32 | 240 | 450 | 570 |
| 12E | 20.3 | 4.5 | 1.00 | 78.2 | | 5.7 | 23 | 100 | 180 | 327 |

(a) partially neutralized fluid, 1.7% PAA, 2.3% LiPAA.

Example No. 12A-12C: MMA polymerization @ 40% solid, AA polymerization @ 20%, composition only approximate.

Example 12D-12E: MMA & AA polymerization @ 20% solids.



# EP 0 453 614 A1

## TABLE 11

**Performance of ER Fluid Made in 50:50 Mineral Oil: Silicone Oil**

| Sample No. | Fluid Composition % | | $H_2O$ | Field Strength Break KV/mm | Viscosity (Poise) | | | | |
|---|---|---|---|---|---|---|---|---|---|
| | PMMA | Li PAA | | | 0.0 | 0.25 | 0.50 | 0.75 | 1.0 |
| 11A | 19.3 | 3.7[a] | 1.0 | 76.0 | 6.3 | 53 | 360 | 580 | overload |
| 11B | 19.2 | 4.3 | 1.0 | 75.5 | 3.8 | 22 | 100 | 270 | 450 |
| 11C | 19.2 | 4.3 | 1.0 | 75.5 | 4.9 | 23 | 25 | 36 | --- |

a  Partially neutralized fluid 1.6% PAA, 2.1% LiPAA.

b  MAA and AA polymerization @ 20% solid.

The data in Examples 11-13 shows that ER fluids with lower zero-field viscosity con be made in lower viscosity continuous phase mediums. The overall performance of the low zero-field viscosity fluids produced according to this invention is only stable at field strengths greater than 1 KV/mm with more than a 100 fold increase from zero-field viscosity observed at 1 KV/mm field strength. However, with selection of the appropriate continuous phase medium and stabilizer, low viscosity, low solids fluids should exhibit

25

stable behavior at low field strengths.

EXAMPLES 14A and 14B

The polymethyl methacrylate dispersions of Example 1 were used as starting hydrophobic seed particles. These polymers were crosslinked using triethylene glycol dimethacrylate (TEGDMA) as a crosslinking agent.

The hydrophilic shell or globule was formed by polymerization of 2-sulfoethyl methacrylate. The procedure used for this polymerization was as follows: 125 grams of mineral oil and 3 grams of 2-sulfoethyl-methacrylate monomer were added to a glass bottle containing 125 grams of the dispersion of Example 1. This mixture was allowed to equilibrate for 24 hours. Then the mixture was transferred to a jacketed glass reactor equipped with a stirrer, thermometer, condenser and nitrogen sparging tube and heated to the polymerization temperature while stirring. Then 4.7 grams (5 ml) of MMA containing 0.3 grams of benzoyl peroxide and 0.2 grams of TEGDMA was slowly fed to the reactor over 30 minutes through an additional funnel attached to the reactor. The product was discharged after allowing it to polymerize overnight.

The performance of the ER fluids of Examples 14A and 14B which were made according to the above procedure is shown in Table 14. The fluid of Example 14A was doped by adding 0.4 grams of water to 40 grams of the fluid. The fluid of Example 14B was prepared by first neutralizing the acid groups using 10 Molar butyl lithium followed by doping with water in the same proportion as in Example 14A.

## Table 14

### PERFORMANCE OF PMMA-2-SULFOETHYL METHACRYLATE BASED FLUID

| EXAMPLE # | FIELD STRENGTH KV/mm | VISCOSITY (POISE) | | | |
|---|---|---|---|---|---|
| | | 0.0 | 0.25 | 0.5 | 1.0 |
| 14A | | 1.7 | 75 | --- | --- |
| 14B | | 14 | 40 | 175 | 320 |

Fluid composition PMMA = 20.8%

2-Sulfoethyl methacrylate = 1.2%

$H_2O$ = 1.0%

Rest = 77.0%

Example 15A

In Example 15A the dispersion polymerization of styrene was carried out according to essentially the same procedure as the methyl methacrylate procedure described in Example 1. This polymerization was also conducted with mineral oil as the continuous phase liquid using the ingredients shown in Table 15A. However, two substitutions were made: Ricon 100, a commercial copolymer of butadiene-styrene manufactured by Colorado Chemical Specialties, Inc. was used as the stabilizer instead of Acryloid 956 and divinyl benzene was used as the crosslinking agent. The particle size of the polystyrene dispersions was very broad compared to PMMA dispersions. The particle size ranged from 0.5 micron to about 30 microns in diameter. Consequently, the stability of these dispersions was less than that of the PMMA dispersions. The stability can be improved by optimization of the proportion of stabilizer and through the choice of the stabilizer polymer.

Example 15B

The same concept and experimental procedure was followed as in Example 1A. Acrylic acid containing dissolved initiator (benzoyl peroxide, BP) and crosslinking agent (triethylene glycol dimethacrylate, TEG-

26

DMA) was fed to the polystyrene dispersion maintained in an inert atmosphere at polymerization temperature (80°C.) over a one hour period. Acrylic acid polymerization was carried out either at 40% solids or after dilution to 20% solids using mineral oil diluent. A typical list of ingredients is shown in Table 15B.

Example 15C

The polystyrene - polyacrylic acid fluids of Example 15B were further improved by neutralizing the carboxylic groups. The groups were neutralised by direct addition of stoichiometric amounts of 10M butyl lithium as in Example 1B. The neutralization reaction was carried out under argon atmosphere. Extreme care was exercised during transfers of butyl lithium. A typical list of ingredients is given in Table 15C.

Examples 15D and 15E

The performance data of neutralized polystyrene-polyacrylic acid fluids is given in Table 15. These fluids were prepared according to the recipes in Tables 15D and 15E and the basic procedure of Example 1B. The performance measurements were carried on the Rheometrics Mechanical Spectrometer.

## TABLE 15

### PERFORMANCE OF STYRENE BASED ER FLUIDS (a)

| EXAMPLE NO. | FIELD STRENGTH KV/mm | Viscosity (Poise) | | | |
|---|---|---|---|---|---|
| | | 0.0 | 0.5 | 1.0 | 1.5 |
| 15D(b) | | 3.5 | 147 | 385 | 645 |
| 15E(c) | | 1.1 | 120 | --- | --- |

(a) Measurements on RMS
(b) Fluid Composition  Polystyrene: 28.2%
    LiPAA:       3.8%
    $H_2O$:      1.5%
    Rest:       66.5%

(c) Fluid Composition  Polystyrene  18.9%
    LiPAA:       2.6%
    $H_2O$:      1.0%
    Rest:       77.5%

### TABLE 15A

| | | Parts/100 |
|---|---|---|
| Mineral Oil | 261.0 gm (300ml) | 57.88 |
| Stabilizer, Ricon 100* | 5.0 gms | 1.11 |
| Styrene Monomer | 187.0 gm (200 ml) | 40.31 |
| Benzoyl Peroxide | 2.5 gm | 0.55 |
| Crosslinking Agent, Divinyl Benzene (DVB) | 0.66 gm | 0.15 |
| Total | 450.96 gm | 100.00 |

*Product by Colorado Chemical Specialties Inc.

### TABLE 15B

Polystyrene Dispersion of Table 15A = 500 gms

| | |
|---|---|
| Acrylic Acid | 21 gm (20 ml) |
| Benzoyl Peroxide | 0.4 gm |
| Crosslinking Agent TEGDMA | 0.14 mg |
| Total | 521.54 gms |

## TABLE 15C

Dispersion of Table 15B = 600 gms
10M Butyl Lithium      = 34 ml

## TABLE 15D

Dispersion of Table 15C = 300 gm
         Mineral Oil      = 100 gm
         $H_2O$           =   2 gm

## TABLE 15E

Dispersion of Table 15C = 80 gms
         Halocarbon 1.8   = 80 gms
         $H_2O$           = 1.6 gms

## Claims

1. A method for making electrorheological fluids in which polymeric solid particles are dispersed in a vehicle consisting of an electrically non-conducting fluid, and a polar liquid is added to the vehicle, characterized in that the polymeric solid particles are substantially hydrophobic, and before the polar liquid is added, a surface modifying monomer that polymerizes to a polymer that has more hydrophilio reactive groups than the polymeric solid particles is added to the vehicle, the surface modifying monomer is polymerized in the vehicle on the surfaces of the solid polymer particles, whereby the solid polymer particles have substantially hydrophobic polymer cores and hydrophilic polymer shells around the cores, and a neutralizer that reacts with the hydrophilic reactive groups of the surface modifying monomer is added to the vehicle to increase the surface potential of the polymer shells on which the polar liquid is adsorbed.

2. A method for making electrorheological fluids as claimed in claim 1, further characterized in that a precursor monomer for the substantially hydrophobic polymeric solid particles is dissolved and polymerized in the vehicle before the surface modifying monomer is added, the precursor monomer being polymerised in the presence of a steric stabilizer that has a strong affinity for the particle surface.

3. A method for making electrorheological fluids as claimed in claim 1 or 2, further characterized in that the polar liquid is water.

4. A method for making electrorheological fluids as claimed in claim 1, 2, or 3, further characterized in that the hydrophilic shells constitute about 15% of the particles by weight.

5. A method for making electrorheological fluids as claimed in claim 1, 2, or 3, further characterized in that the diameter of the particles is 0.1 to not more than 25 microns.

6. A method for making electrorheological fluids as claimed in claim 5, further characterized in that the diameter of the particles is less than 1 micron.

7. A method for making electrorheological fluids as claimed in claim 6, further characterized in that the diameter of the particles including the shell is in the range of 0.5 to 0.8 micron.

8. A method for making electrorheological fluids as claimed in any of the proceeding claims, further characterized in that a crosslinking monomer is present during the polymerization of the surface

29

modifying monomer to form the hydrophilic shell polymer.

9. A method for making electrorheological fluids as claimed in claim 8, further characterized in that the crosslinking monomer is triethylene glycol dimethacrylate (TEGDMA) or divinyl benzene (DVB).

10. A method for making electrorheological fluids as claimed in any of claims 2 to 9, further characterized in that the steric stabilizer polymer is a homopolymer selected from the group consisting of poly(methyl methacrylate), poly(vinyl acetate), poly(12 hydroxystearic acid) and poly(lauryl methacrylate).

11. A method for making electrorheological fluids as claimed in any of the preceding claims, further characterized in that the precursor monomer for the substantially hydrophobic solid polymer particles is an acrylate, a methacrylate, styrene, or a substituted styrene, vinyl acetate, vinyl chloride, or acrylonitrile.

12. A method for making electrorheological fluids as claimed in claim 11, further characterized in that the precursor monomer is ethyl acrylate, propyl acrylate, isopropyl acrylate, butyl acrylate, isobutyl acrylate, methyl methacrylate, methyl ethacrylate, ethyl methacrylate, octyl acrylate, heptyl acrylate, octyl methacrylate, isopropyl methacrylate, 2-ethylhexyl acrylate, nonyl acrylate, hexyl acrylate, n-hexyl methacrylate, decyl acrylate, isodecyl methacrylate, lauryl acrylate, stearyl acrylate, behenyl acrylate, myristyl acrylate, styrene, alpha-methyl styrene, or vinyl toluene.

13. A method for making electrorheological fluids as claimed in claim 12, further characterized in that the precursor monomer is methyl methacrylate.

14. A method for making electrorheological fluids as claimed in any of the preceding claims, further characterized in that the surface modifying monomer is a carboxyl-containing, sulfate-containing or sulfonate-containing monomer.

15. A method for making electrorheological fluids as claimed in claim 14, further characterized in that the surface modifying monomer is acrylic acid.

16. A method for making electrorheological fluids as claimed in claim 14 or 15, further characterized in that the neutralizing agent is an organic base that is soluble in the vehicle selected from the group consisting of alkyl and aryl compounds of lithium, aluminum, zinc, magnesium, boron, sodium, and potassium, lithium tertbutoxide, potassium tertbutoxide, sodium 2-ethyl hexoxide; octadecyl amine, 2-ethyl hexylamine and pyridine; and dialkyl magnesium, benzyl trimethyl ammonium hydroxide and tetrabutyl ammonium hydroxide.

17. A method for making electrorheological fluids as claimed in claim 16, further characterized in that the neutralizing agent is butyl lithium.

European
Patent Office

**EUROPEAN SEARCH
REPORT**

Application Number

**EP 90 10 8125**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 129 513  (J.A. STANGROOM)<br>– – – | 1 | C 10 M 171/00<br>C 08 F 2/08 |
| A | EP-A-0 171 235  (ICI)<br>* Page 4, line 23 - page 10, line 24 *<br>– – – | 1-15 | C 08 F 265/04 //<br>(C 08 F 265/04<br>C 08 F 220:06 ) |
| A | US-A-3 984 339  (KIMIHIKO TAKEO)<br>* Claims 1-10; column 4, lines 15-40 *<br>– – – – – | 1,3 | C 10 N 40:00<br>C 10 N 70:00 |

TECHNICAL FIELDS
SEARCHED (Int. Cl.5)

C 10 M
C 08 F

The present search report has been drawn up for all claims

| Place of search | Date of completion of search | Examiner |
|---|---|---|
| The Hague | 14 December 90 | ROTSAERT L.D.C. |